# EUROPEAN PATENT SPECIFICATION

(11) **EP 4 500 469 B1**
(45) Date of publication and mention of the grant of the patent: **23.09.2026**
(21) Application number: 23711466.5
(22) Date of filing: 15.03.2023
(51) Int. Cl.: G06T 7/70

(54) **INFORMATION PROCESSING APPARATUS AND INFORMATION PROCESSING METHOD**
INFORMATIONSVERARBEITUNGSVORRICHTUNG UND INFORMATIONSVERARBEITUNGSVERFAHREN
APPAREIL DE TRAITEMENT D'INFORMATIONS ET PROCÉDÉ DE TRAITEMENT D'INFORMATIONS

(30) Priority: 30.03.2022 EP 22165705
(43) Date of publication of application: 05.02.2025
(73) Proprietor: Sony Semiconductor Solutions Corporation, Atsugi-shi, Kanagawa 243-0014 (JP); Sony Advanced Visual Sensing AG, 8952 Schlieren (CH)
(72) Inventor: RÜEGG, Michelle, 70327 Stuttgart (DE); OSSWALD, Marc, 70327 Stuttgart (DE); GASSNER, Michael, 70327 Stuttgart (DE); MAKAROV, Mikhail, 70327 Stuttgart (DE)
(74) Representative: MFG Patentanwälte Meyer-Wildhagen Meggle-Freund Gerhard PartG mbB
(86) International application number: PCT/EP2023/056587
(87) International publication number: WO 2023/186542

(56) References cited:
- ETIENNE DUBEAU ET AL: "RGB-D-E: Event Camera Calibration for Fast 6-DOF Object Tracking", ARXIV.ORG, CORNELL UNIVERSITY LIBRARY, 201 OLIN LIBRARY CORNELL UNIVERSITY ITHACA, NY 14853, 5 August 2020 (2020-08-05), XP081733793
- WEIKERSDORFER DAVID ET AL: "Event-based 3D SLAM with a depth-augmented dynamic vision sensor", 2014 IEEE INTERNATIONAL CONFERENCE ON ROBOTICS AND AUTOMATION (ICRA), IEEE, 31 May 2014 (2014-05-31), pages 359 - 364, XP032650768, DOI: 10.1109/ICRA.2014.6906882
- CUI MINGYUE ET AL: "Dense Depth-Map Estimation Based on Fusion of Event Camera and Sparse LiDAR", IEEE TRANSACTIONS ON INSTRUMENTATION AND MEASUREMENT, vol. 71, 1 January 2022 (2022-01-01), USA, pages 1 - 11, XP093039199, ISSN: 0018-9456, DOI: 10.1109/TIM.2022.3144229
- LI BOYANG ET AL: "Enhancing 3-D LiDAR Point Clouds With Event-Based Camera", IEEE TRANSACTIONS ON INSTRUMENTATION AND MEASUREMENT, IEEE, USA, vol. 70, 26 July 2021 (2021-07-26), pages 1 - 12, XP011868199, ISSN: 0018-9456, [retrieved on 20210728], DOI: 10.1109/TIM.2021.3097862

## Description

### TECHNICAL FIELD

The present disclosure generally pertains to an information processing apparatus and an information processing method.

### TECHNICAL BACKGROUND

Generally, depth sensing modalities such as time-of-flight (ToF), structured light (SL) measurement and stereo measurement are known which are able to measure depth of a scene (e.g., an object) at specific moments in time.

For example, ToF cameras are known which may measure the depth of the scene by illuminating the scene with modulated light (at infrared wavelength, for example).

ToF cameras may generally be distinguished between indirect ToF (iToF) and direct ToF (dToF).

In iToF, the scene may be illuminated with modulated light and a depth sensing may be based on measuring a phase delay of a continuous return waveform, such that a depth map (or a point cloud) can be generated.

In dToF, the scene may be illuminated with pulsed light and a time delay of the pulsed return waveform may be measured by processing histograms of photon counts for generating a depth map (or a point cloud).

Such depth sensing technologies are nowadays used in various markets, such as automotive (in-cabin and forward-facing) or mobile phones (backwards or forwards-facing).

Furthermore event-based vision sensors (EVS) or dynamic vision sensor (DVS) are generally known. Such sensor may be configured as imaging sensors which output a high-speed asynchronous stream of events, i.e., brightness changes in the scene. The changes may be indicated with absolute values (without a polarity) or may be indicative of a polarity of the brightness change, i.e., whether the brightness increases (positive polarity) or decreases (negative polarity). Furthermore, brightness changes may be identified based on a time stamp and a pixel coordinate and the brightness change events may occur independently and asynchronously across the event-based image frame, such that events may be detected at a high speed and such that an EVS/DVS may be used in a context of scene-motion or ego motion.

It is further known that to use the above-described sensing technologies for creating an immersive augmented reality (AR) or virtual reality (VR) experience.

Etienne Dubeau et al: "RGB-D-E: Event Camera Calibration for Fast 6-DOF Object Tracking", doi: 10.1109/ISMAR50242.2020.00034, describes a system which combines a recent RGB-D sensor with an event camera.

David Weikersdorfer et al: "Event-based 3D SLAM with a depth-augmented dynamic vision sensor", DOI: 10.1109/ICRA.2014.6906882, describes an event-based dynamic vision sensor fused with a classic frame-based RGBD sensor to produce a sparse stream of depth-augmented 3D points.

Mingyue Cui et al: "Dense Depth-Map Estimation Based on Fusion of Event Camera and Sparse LiDAR", DOI: 10.1109/TIM.2022.3144229, describes enhancing event data from an event camera with depth information from sparse LiDAR to generate dense depth maps.

Although there exist techniques for creating AR/VR experiences, it is generally desirable to improve the existing techniques.

### SUMMARY

According to a first aspect, the disclosure provides an information processing apparatus according to independent claim 1. According to a second aspect, the disclosure provides an information processing method according to independent claim 8.

According to another aspect, the disclosure provides an information processing apparatus comprising circuitry configured to:
obtain a depth image data stream indicative of at least one depth image data frame representing a target object;
obtain a brightness change event data stream indicative of at least one brightness change event data frame representing the target object;
correlate a most recent (most recently obtained/generated) depth image data frame with a most recent brightness change event data frame for generating a fused image data frame; and
generate the fused image data frame.

According to a further aspect, the disclosure provides an information processing method comprising:
obtaining a depth image data stream indicative of at least one depth image data frame representing a target object;
obtaining a brightness change event data stream indicative of at least one brightness change event data frame representing the target object;
correlating a most recent depth image data frame with a most recent brightness change event data frame for generating a fused image data frame; and
generating the fused image data frame.

Further aspects are set forth in the dependent claims, the following description and the drawings.

### BRIEF DESCRIPTION OF THE DRAWINGS

Embodiments are explained by way of example with respect to the accompanying drawings, in which:
Fig. 1 schematically illustrates an information processing apparatus according to the present disclosure;
Fig. 2 schematically illustrates, in a flow diagram, an information processing method 200 according to a first embodiment;
Fig. 3 schematically illustrates, in a flow diagram, an information processing method 200 according to a first embodiment;
Fig. 4 schematically illustrates a timing diagram 300 for generating a fused (i.e., combined or propagated) body pose; and
Fig. 5 schematically illustrates a training timing diagram 400 for training a machine learning algorithm.

### DETAILED DESCRIPTION OF EMBODIMENTS

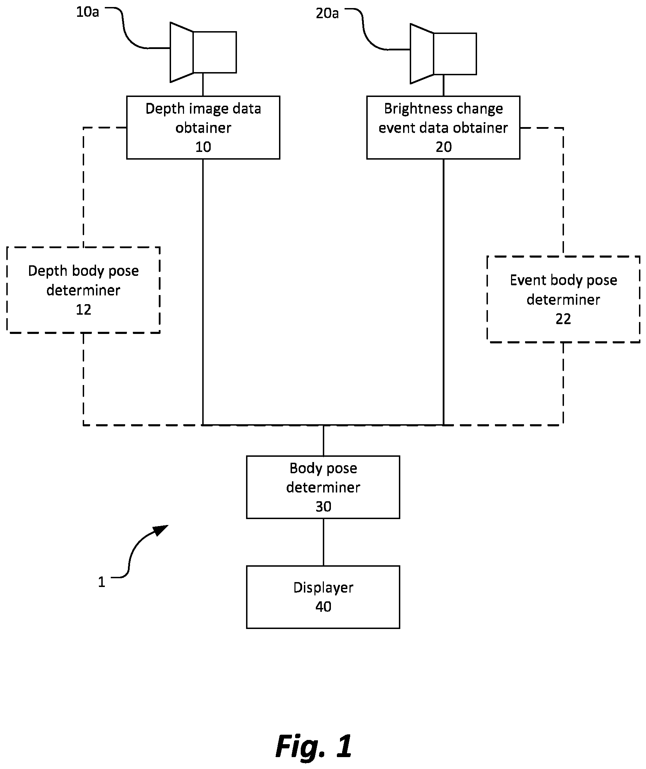

Before a detailed description of the embodiments starting with Fig. 1 is given, general explanations are made.

As mentioned in the outset, depth sensing modalities such as time-of-flight (ToF), SL measurement and stereo measurement are generally known which are able to measure depth of a scene (e.g., an object) at specific moments in time.

For example, ToF cameras are known which may measure the depth of the scene by illuminating the scene with modulated light (at infrared wavelength, for example).

ToF cameras may generally be distinguished between indirect ToF (iToF) and direct ToF (dToF).

In iToF, the scene may be illuminated with modulated light and a depth sensing may be based on measuring a phase delay of a continuous return waveform, such that a depth map (or a point cloud) can be generated.

In dToF, the scene may be illuminated with pulsed light and a time delay of the pulsed return waveform may be measured by processing histograms of photon counts for generating a depth map (or a point cloud).

iToF as well as dToF may require an allocated time to obtain a frame for generating a depth map/point cloud. However, this time may be limited from below by a function of the illumination and sensor parameters since a number of sub-exposures or components may be processed per frame (this may also apply to structured light (SL) measurements or stereo camera measurements). Furthermore, sensor integration time, readout time and other illumination or sensor-specific properties, such as dead time and number of waveform repetitions may set a lower bound for a ToF measurement time.

A limit frame rate of the ToF sensor may then be: f_{ToF} = 1/t_{frame}, wherein t_{frame} is the minimum time for obtaining a frame.

Furthermore, for obtaining a satisfying signal quality level, an illumination power and the integration time may, among others, be critical factors. On the one hand, a long integration time may result in an increased signal-to-noise ratio (i.e., higher signal quality) but may cause motion artifacts since an object may have moved during the integration time. On the other hand, a short integration time may reduce the impact of motion, but may result in a lower signal to noise ratio (SNR) and may considerably degrade the signal quality.

Further, as mentioned in the outset, event-based vision sensors (EVS) or dynamic vision sensor (DVS) are generally known. Such sensor may be configured as imaging sensors which output a high-speed asynchronous stream of events, i.e., brightness changes in the scene. The changes may be indicated with absolute values (without a polarity) or may be indicative of a polarity of the brightness change, i.e., whether the brightness increases (positive polarity) or decreases (negative polarity). Furthermore, brightness changes may be identified based on a time stamp and a pixel coordinate and the brightness change events may occur independently and asynchronously across the event-based image frame, such that events may be detected at a high speed and such that an EVS/DVS may be used in a context of scene-motion or ego motion.

Although there exist techniques for creating AR/VR experiences, it is generally desirable to improve the existing techniques.

It has been recognized that, when tracking a target object with depth sensors, although a highly accurate depth of the surrounding scene/target object may be provided with the depth sensors, their outputs (e.g., depth maps) normally have a high latency (due to acquisition and processing time of the sensor data). This means, the outputs of the depth sensors have a certain delay compared to, e.g., the tracked movements of the target object.

It has been further recognized that EVS tracking the target object may provide sensor data with less delay (low latency). Accordingly, the delay in tracking when using depth sensors may be compensated by using EVS data.

Hence, some embodiments pertain to an information processing apparatus including circuitry configured to:
obtain a depth image data stream indicative of at least one depth image data frame representing a target object;
obtain a brightness change event data stream indicative of at least one brightness change event data frame representing the target object; and
correlate a most recent (most recently obtained/generated) depth image data frame with a most recent brightness change event data frame for generating a fused image data frame;
generate the fused image data frame.

The information processing apparatus may be based on or may be implemented on a computer, a wearable device (e.g. head mounted device such as augmented reality glasses), a server, a cloud service, or the like. The information processing apparatus may be embedded in a media device such as a television, a home entertainment system (e.g. including a television, a gaming console, a receiver box of a provider, a camera, a microphone, a speaker etc.), a mobile device or the like. The information processing apparatus may be based on or may be implemented based on a distributed architecture, for example, distributed across a server, a cloud service, or the like and a media device such that some of its functions are performed by a server or the like and some of its functions are performed by the media device.

Circuitry may pertain to any wired or wireless data transmission/generation device, such as a CPU (central processing unit), GPU (graphics processing unit), FPGA (field-programmable gate array), a server, a computer, or the like. Also, multiple of such devices (also in combination) may pertain to circuitry according to the present disclosure. The circuitry may be based on or may be implemented based on a distributed architecture, for example, distributed across a server, a cloud service, or the like and a media device. The circuitry may further be based on a ToF sensor (or pixel) and EVS/DVS (event-based vision sensor/dynamic vision sensor), a software pipeline, an image signal processor (ISP), or the like.

In some examples, the software pipeline may obtain the depth image data stream and the brightness change event data stream and may yield depth maps or point clouds.

In some examples, the circuitry may be based on a EVS camera and a ToF camera, a hybrid EVS/ToF sensor or the like.

Furthermore, the present disclosure may be applied to any frame-based time-of-flight technology, such as iToF or dToF, structured light depth sensing techniques (which may be based on an iToF sensor or any other sensor), or any other depth sensing technique, such as a LIDAR/RADAR-based approach, a stereo camera-based approach, or the like.

In some embodiments, the circuitry is configured to obtain the depth image data stream representing the target object.

The target object may be a human, a body part of a human, an inanimate object (e.g. plane, drone, car, etc.) or the like. The target object may be also a target scene with or without an object to be observed.

A data stream may include a sequence of data in time, such as consecutive data packets, consecutive (sub-)frames, or the like.

The depth image data stream may be acquired based on a respective depth sensor, e.g. a ToF sensor.

The depth image data stream is indicative for/of at least one depth image data frame. In some example, the depth image data stream includes the at least one depth image data frame or a plurality of depth image frames.

The depth image data frame may include, for example, a depth map or a depth measurement.

In other examples, the depth image data frame may include a (depth) body pose (of the target object) which is determined based on the depth map. In such examples, the circuitry may be configured to determine the body pose based on the depth map, as it is generally known.

As it is generally known, a frame may refer to a time-span in which a measurement is performed.

Furthermore, the circuitry is configured to obtain the brightness change event data stream (hereinafter referred to as events data stream). The events data stream may be acquired with a respective sensor, e.g., an EVS/DVS.

The events data stream is indicative for/of at least one brightness change event data frame (hereafter referred to as events data frame). The at least one events data frame may be indicative of a change of a brightness measured in one EVS/DVS element (hereinafter referred to as event pixel). If the measured brightness in an event pixel is above a predetermined threshold, an event may be generated. Such brightness change events may be indicative of a movement/motion since a moving object may have an influence on detected light.

The events data frame may include fix-sized batches, voxel grids representing space-time or compressed representations, as it is generally known.

In some example, the events data stream includes the at least one events data frame or a plurality of events data frames.

The events data frame may include, for example, events indicating a relative motion of the target object to the EVS.

In other examples, the events data frame may include a (events) body pose (of the target object) which is determined based on events. In such examples, the circuitry may be configured to determine the body pose based on the events, as it is generally known.

The depth image data stream may be synchronous, whereas the events data stream may be asynchronous since the nature of acquisition and readout of the two pixels may be different. It is known that the two data streams may be synchronized in time, e.g., based on correlation-based post processing techniques or based on hardware-based approaches (e.g. a clock circuit, master), such that timestamps of the data streams are aligned. For example, in ToF, the acquisition in different ToF pixels may be synchronized due to a timing of a light source, based on a demodulation signal, on a trigger or clock signal (external or internal, in a master/slave arrangement), or the like. However, an event pixel may be configured to detect a brightness change event at the very moment at which a brightness change occurs on the pixel-level. If there are two event pixels, a detection in each pixel may be indicative of the same or of a different motion.

Although depth sensors can output a highly accurate depth of the surrounding scene and of the target object, they normally have a high latency (due to acquisition and processing time).

This latency between capturing the scene and determining a depth map therefrom results from time needed for data acquisition (e.g. an iToF camera has to acquire four different images of the scene with different modulation phases), data transfer and data processing (e.g., to determine a depth map). The depth sensor output (i.e., depth map) may be used to determine a body pose of the target object with a high accuracy but with a certain delay (here, delay means the time between the depth sensor capturing the scene and output of the depth map or body pose). Therefore, the depth sensor output is used to determine a high-latency and high accuracy body pose.

Further, for EVS output, almost no latency has to be considered as the EVS output includes sparse/raw data that can be used directly by a processor. The events obtained by the EVS are processed to a low-latency and low accuracy body pose of the target object.

When considering a target object at a given point in time, at which the depth sensor and EVS capture the target object, the depth image data frame (e.g. depth map) based on the depth sensor will be available (e.g. for further processing) with a greater delay than the events data frame (e.g. events) based on the EVS.

The human eyes, however, can detect changes at a very high rate and low frequency. Therefore, for an immersive AR/VR experience, the visual content of the AR/VR cannot have a high latency. The time between a photon capture due to a change in the scene to the corresponding change in AR/VR (i.e., lag or latency) should not be, e.g. more than 5ms for AR or 20ms for VR. Higher lag times reduce a user's AR/VR experience and can even lead to motion sickness.

It has been recognized that the low latency EVS data can be used to compensate for this delay in order to get a low latency body pose.

Hence, the depth image data stream and the events data stream are correlated in time with other. More specifically, the most recent depth image data frame and the most recent brightness change event data frame (most recent events data frame) are correlated in time for generating the fused image data frame.

The fused image data frame corresponds to the most recent depth image data frame modified based on the most recent events data frame, and represents the target object/scene as if captured at the same point in time as the most recent brightness change event data frame.

In some instances, the fused image data frame may be indicative or of may be a vector, 2D image, RBG image or depth image. In other words, the output format of the image data frame may be one of a vector, 2D image, RBG image or depth image (as described later herein). In general, the fused image data frame may have several possible output formats. Thus, the feature "fused image data frame" may be also referred to as "fused data frame".

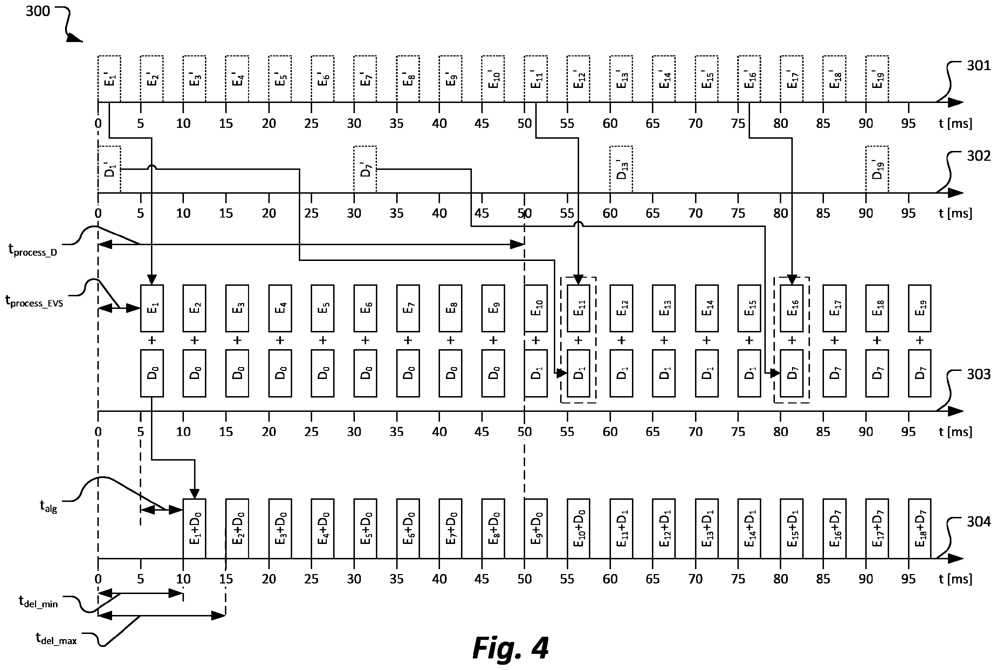

The described difference in delay of availability of the depth image data frame and the events data frame is illustrated in Fig. 4 which schematically depicts a diagram indicating the generation of the fused image data frame (described below).

With reference to Fig. 4, the EVS may acquire a events data stream indicative of a plurality of events data frames E₁...E₁₉. In the given example, the EVS data output is processed at frequency of 200 Hz. Therefore, events data frames E₁...E₁₉ may be provided based on the EVS every 5 milliseconds (ms). Further, a processing time (delay time or latency) of the EVS data is assumed to be 5 ms. Here, the processing time may include time for data acquisition and transfer time from the EVS to a processor.

Further in Fig. 4, it is assumed that a depth sensor to run at a frequency of 33 Hz (new data output every 30 ms). A processing time of the depth sensor data is assumed to be 50 ms. This processing time may include data acquisition (e.g. an iToF has to acquire four different images of the target object with different modulation phases), data transfer (to a processor) and data processing to determine a depth image data frame (e.g. depth map) D₁, D₇, D₁₃, D₁₉.

The indices of the depth image data frames D₁, D₇, D₁₃, D₁₉ and of the events data frames E₁...E₁₉ indicate the timepoint of acquisition by the depth sensor and the EVS, respectively.

The herein indicated values with reference to Fig. 4 for frequencies and processing times are merely exemplary and chosen for the purpose of explaining the underlying concept of the present disclosure. It should be readily apparent that actual numbers may vary in reality.

When looking at timepoint n=1 (i.e., t=0 ms), the EVS captures the target object and an event data frame E₁ provided by the EVS is available for further processing (e.g., to be input into a processor) after 5 ms.

The depth sensor also captures the target object at timepoint n=1. However, the depth image data frame D₁ provided by the depth sensor is available only after 50 ms. Therefore, the depth sensor provides the depth image data frame with a high delay (high latency) compared to the EVS.

Therefore, the depth image data frame D₁ and the events data frame E1 both representing the target object captured at timepoint n=1 are obtained (or in other words, generated or determined) at different times.

In order to generate a fused image frame (E₁+D₀)...(E₁₈+D₇) representing the target object, wherein the delay between capturing the target object and outputting the fused target image is minimized, the most recent events data frame and the most recent depth image data frame, which are available at a given timepoint, are correlated to form an input, based on which the fused image data frame is generated.

For example, at timepoint n=12 (i.e., t=55 ms), an events data frame denoted with E₁₁ (which means that the events data frame represents the target object captured at timepoint n=11) and depth image data frame denoted with D₁ (which means that the depth image data frame represents an image of the target object captured at timepoint n=1) are the most recent ones and, according to the present disclosure, are therefore correlated which each other to generate the fused image data frame (E₁₁+D₁) which represents the target object as if captured at timepoint n=11. That means, although the depth image data frame D₁ may be outdated with respect to a current state/body pose of the target object, the delay in availability of the depth image data frame D₁ is compensated with the events data frame E₁₁.

Now, returning to general explanations, it is further described that the information processing apparatus generates the fused image data frame, e.g. for displaying the fused image data frame to a user to create the AR/VR experience.

By correlating the most recent depth image data frame and the most recent events data frame for generating the fused image data frame, the information processing apparatus provides, in some instances, a high accuracy and low latency image of the target object. Thereby, in some instances, the AR/VR experience of the user may be improved.

In some embodiments, the fused image data frame represents the target object as represented in the most recent events data frame. In other words, the fused image data frame represents the target object at the same timepoint as captured with the events data frame.

Thereby, delay between capturing the target object and outputting the fused image frame data may be minimized.

In some embodiments, the depth image data stream has a lower frame rate than the event data stream. That means that, over the same time frame/span, the amount of depth image data frames indicated by the depth image data stream is less than the amount of event data frames as indicated by the event data stream.

In some embodiments, the at least one depth image data frame is indicative of a depth map. In some examples, the at least one depth image data frame may be the depth map. In other examples, the depth map may be determined based on the at least one depth frame, as it is generally known. Further, when the at least one depth frame includes a plurality of depth image frames, each of them may be indicative of a respective depth map.

Thus, the circuitry may be configured to determine the depth map based on the at least one image data frame.

Accordingly, the circuitry may be configured to determine the most recent depth map based on the most recent depth image data frame.

In some embodiments, the depth map is indicative of a depth body pose of the target object. In some examples, the circuitry may be configured to determine the depth body pose of the target object based on the depth map. Since the depth image data frame is indicative of the depth map, which is indicative of the depth body pose, the depth image data frame is also indicative of the depth body pose. In some examples, the depth image data frame is or includes the depth body pose.

The depth body pose therefore corresponds to a high accuracy and high latency image output indicating a body pose of the target object.

In some examples, the body pose of the target object may be defined by a (3D) position of at least one of each bone and joint. Therefore, the body pose may be described by a vector, wherein the vector may have a size of three times number of joints/bones. In such a case, the image output indicating a body pose of the target object corresponds to a vector.

In some examples, the image output may be a 2D image which may be obtained by rendering the depth map or derived by a body pose information (e.g. the above-mentioned vector).

In some examples, the image output may a 3D mesh representing the body of the target object, wherein the 3D mesh describes the surface of (the body of) the target object. The 3D mesh may be a polygon mesh using, e.g. triangles, quadrilaterals or other simple convex polygons for describing the surface.

Therefore, the high accuracy and high latency image output may be e.g., a vector, a RBG image and a depth image.

Here, "high latency" may depend on the use case. For example, in augmented reality applications, a high latency could mean larger than 5 ms. In virtual reality applications, a high latency could mean larger than 20 ms. Further, "high accuracy" and "high latency" refer to an accuracy and latency which are higher than an accuracy and latency of an event body pose as described later.

In some embodiments, the at least one event data frame is indicative of an event body pose of the target object. In some examples, the circuitry may be configured to determine the event body pose based on the event data frame which is indicative of the events captured by the EVS.

Since the event data frame is indicative of the events captured by the EVS, which are indicative of the event body pose, the event data frame is also indicative of the event body pose. In some examples, the event data frame is or includes the event body pose.

In some examples, the circuitry is further configured to determine the event body pose based on the events acquired by the EVS, as it is generally known.

The event body pose is a low accuracy and low latency image output indicating a body pose of the target object.

Here, the low accuracy and low latency image output may be e.g., a vector, a RBG image and a depth image, as described herein with respect to the high accuracy and high latency image output.

Here, "low latency" may depend on the use case. For example, in augmented reality applications, a low latency could mean equal to or lower than 5 ms. In virtual reality applications, a low latency could mean equal to or lower than 20 ms.

Further, "low accuracy" and "low latency" refer to an accuracy and latency which are lower than an accuracy and latency of the above-described depth body pose as described.

In some embodiments, the fused image data frame is generated by combining the most recent depth image data frame with the most recent event data frame. For example, the circuitry is configured to use the most recent depth image data frame and the most recent event data frame (which are provided by the respective sensors capturing the target object) as input for an algorithm which is trained to fuse the data frames for generating the fused image data frame and to output the result as the fused image data frame. The algorithm may be implemented on a processor or the like. The processor may be a Neural Network processor, ISP or the like.

In some embodiments, the most recent depth image data frame and the most recent event data frame are fused by propagating a most recent depth body pose with the most recent event data frame, wherein the most recent depth body pose is indicated by the most recent depth image data frame.

The most recent depth body pose is the body pose which is the most recent body pose of the target object as captured by the depth sensor. The most recent depth body pose may be included in the most recent depth image data frame.

Due to the needed processing to obtain the depth body pose, the output of the depth image data frame is subject to the above-mentioned delay. Therefore, for example, the most recent depth body pose available at a timepoint n+1 corresponds to a body pose of the target object captured at an earlier timepoint n. However, the most recent event data frame is almost immediately available (processing times are very low compared to the processing times of depth sensor data) and therefore may track a body pose of the target object with less delay.

Thus, when generating the fused image data frame indicative of timepoint n+1, the most depth body pose (which is delayed and therefore indicative for the body pose of the target object at timepoint n) is propagated with the most recent event data frame (which is indicative of the body pose target object at timepoint n+1). Thereby, generating and outputting the fused image data frame is subject to less delay than when using only the depth sensor data, i.e., the most recent depth image data frame, for tracking the body pose of the target object.

In some embodiments, the most recent depth image data frame and the most recent event data frame are fused by combining the most recent depth body pose (as discussed herein) with a most recent event body pose, wherein the most recent depth body pose is indicated by the most recent depth image data frame and the most recent event body pose is indicated by the most recent event data frame.

As discussed above, the most recent depth body pose is output with a delay, whereas output of the most recent event data frame and therefore output of the event body pose experience very little delay.

Therefore, when generating the fused image data frame indicative of timepoint n+1, the most recent depth body pose (which is delayed and therefore indicative for the body pose of the target object at timepoint n) is fused with the most recent event body pose (which is indicative of the body pose target object at timepoint n+1). Thereby, generating and outputting the fused image data frame is subject to less delay than when using only the depth sensor data, i.e., the most recent depth image data frame, for tracking the body pose of the target object.

In some embodiments, the fused image data frame is generated by a machine learning algorithm into which the most recent depth image data frame and the most recent events data frame are input, wherein the machine learning algorithm is trained to generate the fused image data.

The machine learning algorithm may be a neural network, a support vector machine (SVM), a logistic regression, a decision tree, etc.

The machine learning algorithm may be implemented or may run on an artificial intelligence processor, an ISP, a CPU, a GPU, a tensor processing unit (TPU), or the like or a cloud server. The machine learning algorithm may be implemented or may run on a third-party server which provides, for example, artificial intelligence services such as inference by a trained machine learning algorithm.

In some examples, the machine learning algorithm may be trained with a database including a plurality of event data frames and a plurality of depth image data frames, wherein the pluralities of data frames are synchronized, in time, with each other. The database may be used as ground truth against which a loss of the output (i.e., the generated fused image data frames) of the machine learning algorithm are calculated. Thereby, the machine learning algorithm may learn the delay between the depth image data frames and the respective events data frames. Hence, the EVS and the depth sensor do not have to be synchronized during inference time of the machine learning algorithm. Therefore, during inference, the data frames of the event data stream and depth image data stream may be processed as soon as they are available to the processor (e.g., the machine learning algorithm), independent of the (processing) delay in the data.

Thereby, during training, the inputs to the machine learning algorithm mimic the actual properties of unsynchronized data in the sense that the data is not synchronized in time. In other words, during training, the actual delay (latency) in availability of the data frames of the respective data streams are used/considered, instead of processing synchronized depth image data frames and brightness change event data frames.

Some embodiments pertain to an information processing method including:
obtaining a depth image data stream indicative of at least one depth image data frame representing a target object;
obtaining a brightness change event data stream indicative of at least one brightness change event data frame representing the target object;
correlating a most recent depth image data frame with a most recent brightness change event data frame for generating a fused image data frame; and
generating the fused image data frame.

The information processing method may be carried out with an information processing apparatus, as discussed herein.

In some embodiments, the fused image data frame represents the target object as represented in the most recent brightness change event data frame, as discussed herein.

In some embodiments, the depth image data stream has a lower frame rate than the event data stream, as discussed herein.

In some embodiments, the at least one depth image data frame is indicative of a depth map, as discussed herein.

In some embodiments, the depth map is indicative of a depth body pose of the target object, as discussed herein.

In some embodiments, the at least one event data frame is indicative of an event body pose of the target object, as discussed herein.

In some embodiments, the fused image data frame is generated by fusing the most recent depth image data frame with the most recent event data frame, as discussed herein.

In some embodiments, the most recent depth image data frame and the most recent event data frame are fused by propagating a most recent depth body pose with the most recent event data frame, wherein the most recent depth body pose is indicated by the most recent depth image data frame, as discussed herein.

In some embodiments, the most recent depth image data frame and the most recent event data frame are fused by combining a most recent depth body pose with a most recent event body pose, wherein the most recent depth body pose is indicated by the most recent depth image data frame and the most recent event body pose is indicated by the most recent event data frame, as discussed herein.

In some embodiments, the fused image data frame is generated by a machine learning algorithm into which the most recent depth image data frame and the most recent bright change event data frame are input, wherein the machine learning algorithm is trained to generate the fused image data, as discussed herein.

Returning to Fig. 1, in which an information processing apparatus 1 according to the present disclosure is schematically illustrated in block diagrams.

The information processing apparatus 1 comprises at depth image data obtainer 10, a depth map determiner 11, an optional depth body pose obtainer 12, a brightness change event data obtainer 20 (hereinafter EVS data obtainer), an optional event body pose determiner 22, a body pose determiner 30 and a displayer 40.

The depth image data obtainer 10 is configured to obtain depth image data. The depth image data is acquired by a depth sensor 10a. The depth sensor 10a may be part of the information processing apparatus 1. In some examples, the depth sensor 10a may be part of the depth image data obtainer 11.

The depth sensor 10a captures a target object (not shown), which may be scene, a human, an inanimate object or the like.

The depth image data is or is indicative of a depth map representing the target object.

The optional depth body pose determiner 12 is configured to obtain the depth image data from the depth image data obtainer 10 and to determine a depth body pose based on the depth image data.

The EVS data obtainer 20 is configured to obtain brightness change event data (hereinafter event data). The EVS data is acquired by a EVS 20a. The EVS 20a may be part of the information processing apparatus 1. In some examples, the EVS 20a may be part of the EVS data obtainer 20.

The EVS data is or is indicative of events related to the target object, wherein the events are indicative of a relative motion between the target object and the EVS 20a.

The optional event body pose determiner 22 is configured to obtain the EVS data from the EVS data obtainer 20 and to determine an event body pose.

The body determiner 30 is configured to obtain the (raw) depth image data from the depth image obtainer 10 or the depth body pose from the depth body pose determine 12. The body determiner 30 is further configured to obtain the (raw) EVS data from the EVS data obtainer 20 or the event body pose from the EVS body pose determiner 22.

The body determiner 30 is configured to correlate the most recent depth body pose and the most recent event body pose so as to generate a fused body pose (fused image data frame) which includes or is indicative of a high accuracy body pose, which is based on fusing the most recent depth body pose with the most recent EVS body pose (combination) or with the raw EVS data (propagation). Further, the body determiner 30 is configured to generate the fused body pose.

The displayer 40 is configured to obtain the fused body pose from the body pose determiner 30 and to display the fused body pose to a user. To this end, the displayer 40 may include or may connected to a display unit.

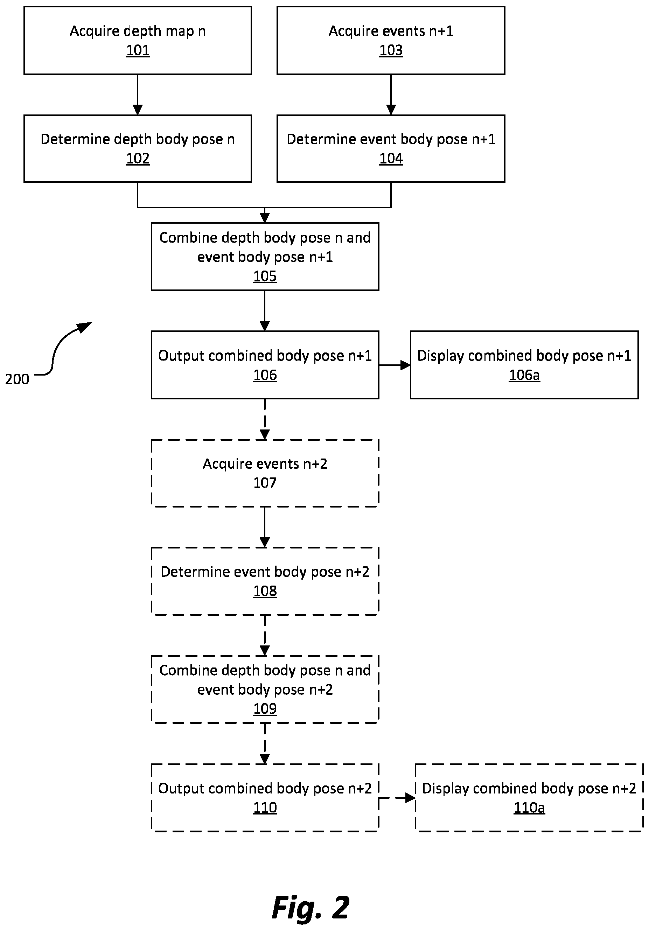

Fig. 2 schematically illustrates, in a flow diagram, an information processing method 200 according to a first embodiment.

At 101, a depth map n (representing the target object at timepoint n) is acquired.

At 102, a depth body pose n (representing a body pose of the target object at timepoint n) is determined. Due to the processing time for determining the depth map n and the depth body pose based on the depth map n, the output (i.e., the depth body pose n) is generated or made available at timepoint n+1.

At 103, events n+1 (representing the target object at timepoint n+1) are acquired. The events correspond to EVS data obtained from the EVS 20a.

At 104, an event body pose n+1 (representing a body pose of the target object at timepoint n+1) is determined (based on the events n+1). The processing time for determining the events n+1 and the event body pose n+1 based on the events n+1 is rather low and almost neglectable.

At 105, the depth body pose n (which is available at timepoint n+1) and the event body pose n+1 are combined for generating a combined body pose n+1 which represents the body pose of the target object at timepoint n+1.

At 106, the combined body pose n+1 is output/generated.

Optionally, at 106a, the combined body pose n+1 is displayed.

Optionally, the information processing method 200 further includes blocks 107, 108, 109, 110, 110a.

At 107, events n+2 (representing the target object at timepoint n+2) are acquired.

At 108, an event body pose n+2 (representing a body pose of the target object at timepoint n+2) is determined (based on the events n+2).

At 109, the depth body pose n (which is available at timepoint n+1) and the event body pose n+2 are combined for generating a combined body pose n+2 which represents the body pose of the target object at timepoint n+2. Here, the depth body pose n is the most recent depth body pose, since a new depth map and therefore a new depth body pose would be only available at a later timepoint n+m.

At 110, the combined body pose n+2 is output/generated.

Optionally, at 110a, the combined body pose n+2 is displayed.

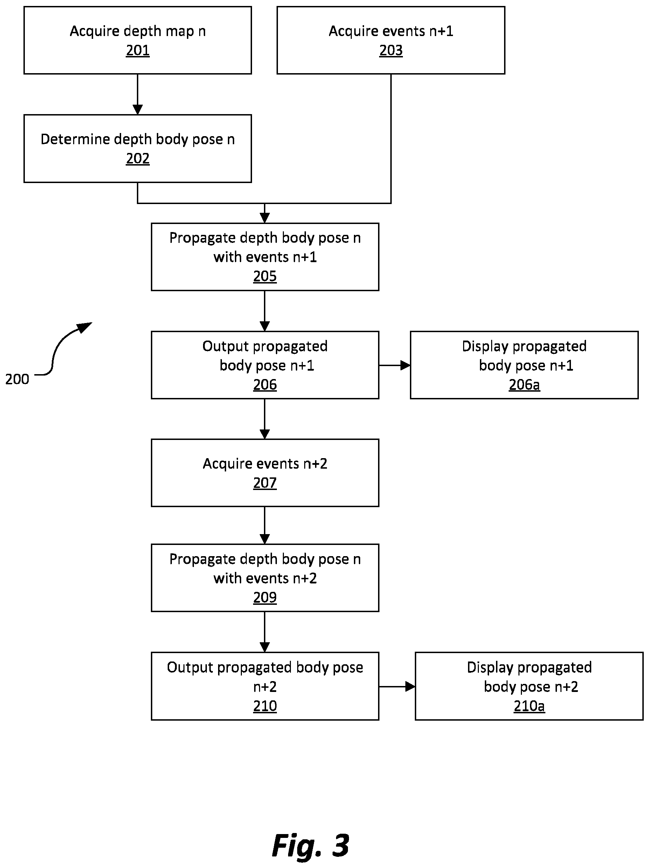

Fig. 3 schematically illustrates, in a flow diagram, an information processing method 300 according to a second embodiment.

At 201, a depth map n (representing the target object at timepoint n) is acquired.

At 202, a depth body pose n (representing a body pose of the target object at timepoint n) is determined. Due to the processing time for determining the depth map n and the depth body pose based on the depth map n, the output (i.e., the depth body pose n) is generated or made available at timepoint n+1.

At 203, events n+1 (representing the target object at timepoint n+1) are acquired. The events n+1 correspond to EVS data obtained from the EVS 20a.

At 205, the depth body pose n (which is available at timepoint n+1) is propagated based on the events n+1 for generating a propagated body pose n+1 which represents the body pose of the target object at timepoint n+1.

At 206, the propagated body pose n+1 is output/generated.

At 206a, the propagated body pose n+1 is displayed.

Optionally, the information processing method 300 further includes blocks 207, 209, 210, 210a.

At 207, events n+2 (representing the target object at timepoint n+2) are acquired.

At 209, the depth body pose n (which is available at timepoint n+1) is propagated based on the events n+2 for generating a combined body pose n+2 which represents the body pose of the target object at timepoint n+2. Here, the depth body pose n is the most recent depth body pose, since a new depth map and therefore a new depth body pose would be only available at a later timepoint n+m.

At 210, the propagated body pose n+2 is output/generated.

At 210a, the propagated boy pose n+2 is displayed.

Fig. 4 schematically illustrates a timing diagram 300 for generating the fused (i.e., combined or propagated) body pose. The timing diagram 300 include a EVS acquisition time scale 301, a depth sensor acquisition time scale 302, a processor input time scale 303 and a processor output time scale 304, each indicating the time in milliseconds.

In the present example, it is assumed that the output of the EVS 20a (i.e., EVS data or events) is processed at a frequency of 200Hz (which means that new output based on the EVS data is generated/determined every 5ms). Further, no additional latency (i.e., delay/lag) is added to the EVS output as it includes sparse data that can be used directly by a processor such as the body pose determiner 30. For the processor, a 5ms latency is assumed.

The EVS acquisition time scale 301 indicates EVS acquisition timepoints E₁'...E₁₉'. Here, indices of the EVS acquisition timepoints E₁'...E₁₉' indicate timepoints, at which the EVS 20a captures the target object. The EVS acquisition time scale 301 indicates at total of 19 timepoints n=1...19. In the present example, the first timepoint n=1 is at 0 ms, the second timepoint n=2 is at 5 ms, the third timepoint n=3 is at 10 ms, etc.

In the present example, it is further assumed that the depth sensor 10a runs at a frequency of 33.3 Hz (which means that a new depth map is generated/determined every 30ms). Further, a latency of 50ms is assumed. This latency includes the time for data acquisition (e.g. an iToF camera has to acquire four different images of the target object with different modulation phases), data transfer and data processing to get the depth map. Another 5ms latency is added for the processing of the depth body pose based on the depth map.

The depth sensor data acquisition time scale 302 indicates depth sensor acquisition timepoints D₁', D₇', D₁₃', D₁₉'. Here again, the indices of the of the depth sensor acquisition timepoints D₁', D₇', D₁₃', D₁₉' indicate the timepoints, at which the depth sensor 10a captures the target object. The depth sensor acquisition time scale 302 indicates a total of four timepoints, i.e., the first timepoint n=1, the seventh timepoint n=7, the 13^{th} timepoint n=13 and the 19^{th} timepoint n=19, at which the depth sensor 10a captures the target object. The depth sensor 10a captures the target object less often than the EVS 20a due to the imaging frequency of 33.3 Hz.

The processing input time scale 303 indicates the timepoints at which depth body poses D₁, D₇ and events E₁...E₁₉ are made available for further processing by the body pose determiner 30.

Generally, a depth body pose is determined based on a depth map acquired by the depth sensor 10a. However, in the present example, a delay of 50 ms is assumed. Therefore, between the first depth sensor acquisition timepoint D₁' and the timepoint, at which the depth body pose D₁ is provided, there is a delay of 50 ms.

In the present example, the events or the events body pose provided by the EVS 20a are available with less delay. In the present example, the delay between the EVS acquisition timepoint and the timepoint, at which the events or the event body pose (derived from the events) are available, is 5 ms.

Therefore, for the first timepoint n=1 to the 10^{th} timepoint n=10, the corresponding events (or events body pose) E₁...E₁₀ are already available for further processing, whereas the data acquired by the depth sensor 10a at the first timepoint D₁' is still processed to determine the depth map or the depth body pose at timepoint n. Here, in the present example, the depth body pose at timepoint n is available for further processing at timepoint n=7. Accordingly, the depth body pose captured at timepoint n=7 is available at timepoint n=13. The depth body pose captured at timepoints n=13 and n=19 are not shown in the processing input time scale 303, since they are available only after the time indicates by the time scale 303.

The body pose determiner 30 has as inputs the most recent data available and provided by the depth sensor 10a and EVS 20a. In the present example, the events or the events body poses E₁ to E₇ are available, the depth body pose E₁ is still determined. Therefore, while there is no depth body pose available, the body pose determiner receives as input a dummy depth body pose E₀. The dummy depth body pose E₀ may be an empty data frame or a predetermined depth body pose.

The body pose determiner 30 generates outputs (fused image data frames) based on the most recent depth body pose (most recent depth image frame) and the most recent events (or most recent event body pose, i.e., most recent event data frame) at a given timepoint.

In some examples, the body pose determiner 30 propagates the most recent depth body pose with the most recent events to generate an output which includes a depth body pose as if captured at the timepoint of the most recent events.

In other examples, the body pose determiner 30 combines the most recent depth body pose with the most recent event body pose to generate an output which includes a depth body pose as if captured at the timepoint of the most recent events.

The processing output time scale 304 indicates the timepoints, at which the output from the body pose determiner 30 are output. Here, a processing time t_{alg} of the body pose determiner 30 is assumed to be 5 ms.

It is apparent from Fig. 4 that a first output (E₁+D₀) of the body pose determiner 30 is generated with a minimum delay t_{del_min} of 10 ms and a maximum delay t_{del_max} of under 15 ms. Therefore, when fusing the most recent (or most recently available) depth body pose D with the most recent events (or most recent event body pose) E, the minimum delay t_{del_min} and the maximum delay t_{del_max} can be greatly reduced and are only dependent on processing delay of the EVS data t_{process_EVS} and the processing time t_{alg} of the body pose determiner 30. Hence, the processing delay of the depth data t_{process_D} does not have any influence on the latency of the output of the body pose determiner 30, i.e., the minimum delay t_{del_min} and the maximum delay t_{del_max}.

The minimum delay t_{del_min} and the maximum delay t_{del_max} correspond to the time between capturing the target object and outputting a corresponding depth body pose (fused image data frame).

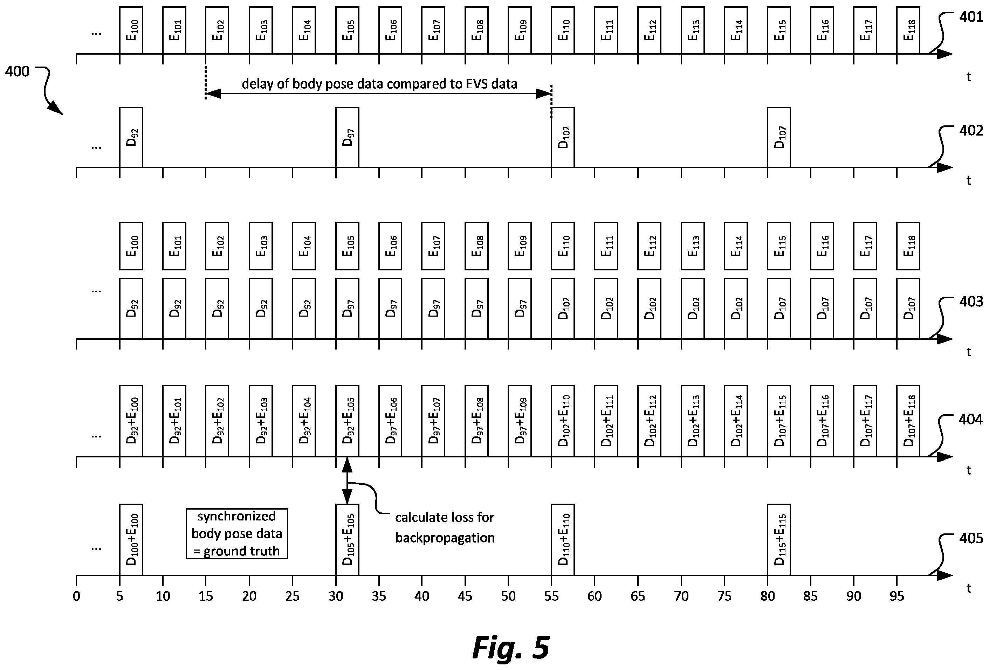

Fig. 5 schematically illustrates a training timing diagram 400 for training a machine learning algorithm (used in or by the body pose determiner 30). The training timing diagram 400 includes events availability time scale 401, a depth body pose availability time scale 402, a processing input time scale 403 (which correspond to the processing input time scale 303 of Fig. 4), a processing output time scale 404 (which correspond to the processing input time scale 304 of Fig. 4) and a synchronized body pose time scale 405.

The events availability time scale 401 indicates when events or respective event body poses derived therefrom E₁₀₀...E₁₁₈ are available to be input into the body pose determiner 30.

The depth body pose time scale 402 indicates when depth body poses D₉₂, D₉₇, D₁₀₂, D₁₀₇ are available to be input into the body pose determiner 30.

As example, when considering the events E₁₀₂ which captures the target object at timepoint n=102, a depth body pose D₁₀₂ derived from a depth map captured at the same timepoint n=102 is only available after a delay at timepoint n=110.

The indices of the depth body poses D₉₂, D₉₇, D₁₀₂, D₁₀₇ and of the events E₁₀₀...E₁₁₈ indicate the timepoint, at which the depth sensor 10a and the EVS 20a, respectively, captures the target object.

However, the body pose determiner 30 fuses unsynchronized data, i.e., the most recent depth body pose and the most recent events (or the most recent event body pose), as indicated in processing input time scale 403, to generate a fused body pose (Dₓ+E_{y}) (fused data image frame), as indicated in processing output scale 404. Here, the different indices used for the fused body pose (Dₓ+E_{y}) indicate that unsynchronized data is used.

The synchronized body pose time scale 405 indicates the training the body pose determiner 30, e.g. a machine learning algorithm thereof, by comparing the fused body pose (Dₓ+E_{y}) with a dataset (ground truth) including synchronized data (D_{y}+E_{y}) to calculate a loss for backpropagation. Here, the same indices used for synchronized data (D_{y}+E_{y}) indicate that synchronized data is used.

In some embodiments, also a non-transitory computer-readable recording medium is provided that stores therein a computer program product, which, when executed by a processor, such as the processor described above, causes the method described to be performed.

All units and entities described in this specification and claimed in the appended claims can, if not stated otherwise, be implemented as integrated circuit logic, for example on a chip, and functionality provided by such units and entities can, if not stated otherwise, be implemented by software.

In so far as the embodiments of the disclosure described above are implemented, at least in part, using software-controlled data processing apparatus, it will be appreciated that a computer program providing such software control and a transmission, storage or other medium by which such a computer program is provided are envisaged as aspects of the present disclosure.

## Claims

1. Information processing apparatus comprising circuitry configured to:
obtain a depth image data stream indicative of at least one depth image data frame representing a target object;
obtain a brightness change event data stream indicative of at least one brightness change event data frame representing the target object;
correlate a most recent depth image data frame with a most recent brightness change event data frame for generating a fused image data frame; and
**characterised in that**
generate the fused image data frame by propagating a most recent depth body pose with the most recent brightness change event data frame, wherein the most recent depth body pose is indicated by the most recent depth image data frame.

2. The information processing apparatus according to claim 1, wherein the fused image data frame represents the target object as represented in the most recent brightness change event data frame.

3. The information processing apparatus according to claim 1, wherein the depth image data stream has a lower frame rate than the brightness change event data stream.

4. The information processing apparatus according to claim 1, wherein the at least one depth image data frame is indicative of a depth map.

5. The information processing apparatus according to claim 4, wherein the depth map is indicative of a depth body pose of the target object.

6. The information processing apparatus according to claim 1, wherein the at least one brightness change event data frame is indicative of an event body pose of the target object.

7. The information processing apparatus according to claim 1, wherein the fused image data frame is generated by a machine learning algorithm into which the most recent depth image data frame and the most recent bright change event data frame are input, wherein the machine learning algorithm is trained to generate the fused image data.

8. Computer-implemented Information processing method comprising:
obtaining a depth image data stream indicative of at least one depth image data frame representing a target object;
obtaining a brightness change event data stream indicative of at least one brightness change event data frame representing the target object;
correlating a most recent depth image data frame with a most recent brightness change event data frame for generating a fused image data frame; and
**characterised in that**
generating the fused image data frame by propagating a most recent depth body pose with the most recent brightness change event data frame, wherein the most recent depth body pose is indicated by the most recent depth image data frame.

9. The information processing method according to claim 8, wherein the fused image data frame represents the target object as represented in the most recent brightness change event data frame.

10. The information processing method according to claim 8, wherein the depth image data stream has a lower frame rate than the brightness change event data stream.

11. The information processing method according to claim 8, wherein the at least one depth image data frame is indicative of a depth map.

12. The information processing method according to claim 11, wherein the depth map is indicative of a depth body pose of the target object.

13. The information processing method according to claim 8, wherein the at least one brightness change event data frame is indicative of an event body pose of the target object.

14. The information processing method according to claim 8, wherein the fused image data frame is generated by a machine learning algorithm into which the most recent depth image data frame and the most recent bright change event data frame are input, wherein the machine learning algorithm is trained to generate the fused image data.

## Patentansprüche

1. Informationsverarbeitungseinrichtung, umfassend Schaltlogik, die konfiguriert ist zum:
Erhalten eines Tiefenbild-Datenstroms, der mindestens einen Tiefenbild-Datenframe angibt, der ein Zielobjekt darstellt;
Erhalten eines Helligkeitsänderungsereignis-Datenstroms, der mindestens einen Helligkeitsänderungsereignis-Datenframe angibt, der das Zielobjekt darstellt;
Korrelieren eines jüngsten Tiefenbild-Datenframes mit einem jüngsten Helligkeitsänderungsereignis-Datenframe zum Erzeugen eines fusionierten Bilddatenframes; und
**gekennzeichnet durch**
Erzeugen des fusionierten Bilddatenframes durch Propagieren einer jüngsten Tiefenkörperhaltung mit dem jüngsten Helligkeitsänderungsereignis-Datenframe, wobei die jüngste Tiefenkörperhaltung durch den jüngsten Tiefenbild-Datenframe angegeben wird.

2. Informationsverarbeitungseinrichtung nach Anspruch 1, wobei der fusionierte Bilddatenframe das Zielobjekt so darstellt, wie es in dem jüngsten Helligkeitsänderungsereignis-Datenframe dargestellt ist.

3. Informationsverarbeitungseinrichtung nach Anspruch 1, wobei der Tiefenbild-Datenstrom eine niedrigere Bildrate als der Helligkeitsänderungsereignis-Datenstrom aufweist.

4. Informationsverarbeitungseinrichtung nach Anspruch 1, wobei der mindestens eine Tiefenbild-Datenframe eine Tiefenkarte angibt.

5. Informationsverarbeitungseinrichtung nach Anspruch 4, wobei die Tiefenkarte eine Tiefenkörperhaltung des Zielobjekts angibt.

6. Informationsverarbeitungseinrichtung nach Anspruch 1, wobei der mindestens eine Helligkeitsänderungsereignis-Datenframe eine Ereigniskörperhaltung des Zielobjekts angibt.

7. Informationsverarbeitungseinrichtung nach Anspruch 1, wobei der fusionierte Bilddatenframe durch einen Algorithmus für maschinelles Lernen erzeugt wird, in den der jüngste Tiefenbild-Datenframe und der jüngste Helligkeitsänderungsereignis-Datenframe eingegeben werden, wobei der Algorithmus für maschinelles Lernen dazu trainiert ist, die fusionierten Bilddaten zu erzeugen.

8. Computerimplementiertes Informationsverarbeitungsverfahren, umfassend:
Erhalten eines Tiefenbild-Datenstroms, der mindestens einen Tiefenbild-Datenframe angibt, der ein Zielobjekt darstellt;
Erhalten eines Helligkeitsänderungsereignis-Datenstroms, der mindestens einen Helligkeitsänderungsereignis-Datenframe angibt, der das Zielobjekt darstellt;
Korrelieren eines jüngsten Tiefenbild-Datenframes mit einem jüngsten Helligkeitsänderungsereignis-Datenframe zum Erzeugen eines fusionierten Bilddatenframes; und
**gekennzeichnet durch**
Erzeugen des fusionierten Bilddatenframes durch Propagieren einer jüngsten Tiefenkörperhaltung mit dem jüngsten Helligkeitsänderungsereignis-Datenframe, wobei die jüngste Tiefenkörperhaltung durch den jüngsten Tiefenbild-Datenframe angegeben wird.

9. Informationsverarbeitungsverfahren nach Anspruch 8, wobei der fusionierte Bilddatenframe das Zielobjekt so darstellt, wie es in dem jüngsten Helligkeitsänderungsereignis-Datenframe dargestellt ist.

10. Informationsverarbeitungsverfahren nach Anspruch 8, wobei der Tiefenbild-Datenstrom eine niedrigere Bildrate als der Helligkeitsänderungsereignis-Datenstrom aufweist.

11. Informationsverarbeitungsverfahren nach Anspruch 8, wobei der mindestens eine Tiefenbild-Datenframe eine Tiefenkarte angibt.

12. Informationsverarbeitungsverfahren nach Anspruch 11, wobei die Tiefenkarte eine Tiefenkörperhaltung des Zielobjekts angibt.

13. Informationsverarbeitungsverfahren nach Anspruch 8, wobei der mindestens eine Helligkeitsänderungsereignis-Datenframe eine Ereigniskörperhaltung des Zielobjekts angibt.

14. Informationsverarbeitungsverfahren nach Anspruch 8, wobei der fusionierte Bilddatenframe durch einen Algorithmus für maschinelles Lernen erzeugt wird, in den der jüngste Tiefenbild-Datenframe und der jüngste Helligkeitsänderungsereignis-Datenframe eingegeben werden, wobei der Algorithmus für maschinelles Lernen dazu trainiert ist, die fusionierten Bilddaten zu erzeugen.

## Revendications

1. Appareil de traitement d'informations comprenant un système de circuits configuré pour :
obtenir un flux de données d'image de profondeur indiquant au moins une trame de données d'image de profondeur représentant un objet cible ;
obtenir un flux de données d'événement de changement de luminosité indiquant au moins une trame de données d'événement de changement de luminosité représentant l'objet cible ;
corréler une trame de données d'image de profondeur la plus récente à une trame de données d'événement de changement de luminosité la plus récente pour la génération d'une trame de données d'image fusionnées ; et
**caractérisé en ce que**
l'on génère la trame de données d'image fusionnées par propagation d'une posture corporelle de profondeur la plus récente avec la trame de données d'événement de changement de luminosité la plus récente, dans lequel la posture corporelle de profondeur la plus récente est indiquée par la trame de données d'image de profondeur la plus récente.

2. Appareil de traitement d'informations selon la revendication 1, dans lequel la trame de données d'image fusionnées représente l'objet cible tel que représenté dans la trame de données d'événement de changement de luminosité la plus récente.

3. Appareil de traitement d'informations selon la revendication 1, dans lequel le flux de données d'image de profondeur a une fréquence de trames plus basse que le flux de données d'événement de changement de luminosité.

4. Appareil de traitement d'informations selon la revendication 1, dans lequel l'au moins une trame de données d'image de profondeur indique une carte de profondeur.

5. Appareil de traitement d'informations selon la revendication 4, dans lequel la carte de profondeur indique une posture corporelle de profondeur de l'objet cible.

6. Appareil de traitement d'informations selon la revendication 1, dans lequel l'au moins une trame de données d'événement de changement de luminosité indique une posture corporelle d'événement de l'objet cible.

7. Appareil de traitement d'informations selon la revendication 1, dans lequel la trame de données d'image fusionnées est générée par un algorithme d'apprentissage automatique dans lequel la trame de données d'image de profondeur la plus récente et la trame de données d'événement de changement de luminosité la plus récente sont entrées, dans lequel l'algorithme d'apprentissage automatique est entraîné pour générer les données d'image fusionnées.

8. Procédé de traitement d'informations implémenté par ordinateur comprenant :
l'obtention d'un flux de données d'image de profondeur indiquant au moins une trame de données d'image de profondeur représentant un objet cible ;
l'obtention d'un flux de données d'événement de changement de luminosité indiquant au moins une trame de données d'événement de changement de luminosité représentant l'objet cible ;
la corrélation d'une trame de données d'image de profondeur la plus récente à une trame de données d'événement de changement de luminosité la plus récente pour la génération d'une trame de données d'image fusionnées ; et
**caractérisé en ce que**
l'on génère la trame de données d'image fusionnées par propagation d'une posture corporelle de profondeur la plus récente avec la trame de données d'événement de changement de luminosité la plus récente, dans lequel la posture corporelle de profondeur la plus récente est indiquée par la trame de données d'image de profondeur la plus récente.

9. Procédé de traitement d'informations selon la revendication 8, dans lequel la trame de données d'image fusionnées représente l'objet cible tel que représenté dans la trame de données d'événement de changement de luminosité la plus récente.

10. Procédé de traitement d'informations selon la revendication 8, dans lequel le flux de données d'image de profondeur a une fréquence de trames plus basse que le flux de données d'événement de changement de luminosité.

11. Procédé de traitement d'informations selon la revendication 8, dans lequel l'au moins une trame de données d'image de profondeur indique une carte de profondeur.

12. Procédé de traitement d'informations selon la revendication 11, dans lequel la carte de profondeur indique une posture corporelle de profondeur de l'objet cible.

13. Procédé de traitement d'informations selon la revendication 8, dans lequel l'au moins une trame de données d'événement de changement de luminosité indique une posture corporelle d'événement de l'objet cible.

14. Procédé de traitement d'informations selon la revendication 8, dans lequel la trame de données d'image fusionnées est générée par un algorithme d'apprentissage automatique dans lequel la trame de données d'image de profondeur la plus récente et la trame de données d'événement de changement de luminosité la plus récente sont entrées, dans lequel l'algorithme d'apprentissage automatique est entraîné pour générer les données d'image fusionnées.
